# EUROPÄISCHE PATENTSCHRIFT

(11) **EP 2 995 185 B1**
(45) Veröffentlichungstag und Bekanntmachung des Hinweises auf die Patenterteilung: **03.01.2018**
(21) Anmeldenummer: 15401091.2
(22) Anmeldetag: 04.09.2015
(51) Int. Cl.: A01C 7/08, A01C 15/00

(54) **SÄMASCHINE**
SOWING MACHINE
SEMOIR

(30) Priorität: 10.09.2014 DE 102014113013
(43) Veröffentlichungstag der Anmeldung: 16.03.2016
(73) Patentinhaber: Amazonen-Werke H. Dreyer GmbH & Co. KG, 49205 Hasbergen (DE)
(72) Erfinder: Goretzko, Robert, 28309 Bremen (DE); Mertens, Daniel, 26121 Oldenburg (DE)

(56) Entgegenhaltungen:
- EP-A1- 2 777 375
- EP-B1- 2 489 251
- WO-A1-2013/180619
- DE-A1-102009 014 170

## Beschreibung

Eine derartige Sämaschine ist in der WO 2013/180 619 A1 beschrieben.

Eine weitere Sämaschine ist in der Praxis bekanntgeworden. Diese Sämaschine weist einen Rahmen auf. Auf diesem Rahmen ist ein erster Vorratsbehälter für die Aufnahme von Saatgut oder Dünger vorgesehen. Hinter diesem ersten Vorratsbehälter ist beabstandet zu diesem zumindest ein zweiter Vorratsbehälter zur Aufnahme von Microgranulat vorgesehen. Diesem zweiten Vorratsbehälter ein von einem Luftstrom beaufschlagtes Dosiergehäuse zugeordnet. Die diesem Dosiergehäuse zugeleitete Luftströmung wird von einem Gebläse, welches hinter dem zweiten Vorratsbehälter angeordnet ist, wie dieses beispielsweise in der EP2489251B1 gezeigt ist, erzeugt. Hierbei ist das Gebläse über eine mit Druckluft beaufschlagte Luftzuleitung mit dem Dosiergehäuse verbunden. Weiterhin weist das Dosiergehäusen Abgangsöffnungen auf, an denen mit einer Luftströmung beaufschlagte Materialleitungen, die zu Ausbringelementen führen, angeschlossen sind. Durch die Anordnung des Gebläses hinter dem zweiten Vorratsbehälter ergibt sich eine relativ lang bauende und unvorteilhafte Ausgestaltung der Sämaschine.
Der Erfindung liegt die Aufgabe zu Grunde, eine kurz bauende und vorteilhafte Anordnung des Gebläses sowie der Luftzuführung von dem Gebläse zu dem pneumatisch beaufschlagten Dosierer zu schaffen.

Diese Aufgabe wird
erfindungsgemäß dadurch gelöst, dass zwei Luftzuleitungen für das Dosiergehäuse des zweiten Vorratsbehälters vorgesehen sind, dass die eine Luftzuleitung auf der einen Seite seitlich an dem zweiten Vorratsbehälter und/oder zugeordnetem Dosiergehäuse und die andere Luftzuleitung auf der anderen Seite seitlich an dem zweiten Vorratsbehälter und/oder zugeordnetem Dosiergehäuse vorbei von vorne nach hinten geführt ist.

Das Gebläse ist vor dem zweiten Vorratsbehälter, der in diesem Falle der hinterste Vorratsbehälter ist, angeordnet, so dass das Gebläse die Maschine nicht unnötig nach hinten verlängert. Hierbei kann auch das für andere Zwecke der Sämaschine eingesetzte Gebläse zusätzlich zur Erzeugung des dem zweiten Vorratsbehälter zugeordneten Dosiergehäuses zugeführten Luftstromes genutzt werden. Es ergibt sich somit eine kompakter bauende Sämaschine.

Die hier vorgeschlagene Ausgestaltung ist vorteilhaft, insbesondere wenn relativ viel Druckluft bei breitbauenden Maschinen dem Dosiergehäuse zugeführt werden muss.

Um die Luftzuleitung im vorteilhafterweise aus dem vorderen Bereich der Sämaschine zu dem hinteren Bereich des Dosiergehäuses vorteilhaft zu führen, ist vorgesehen dass die Luftzuleitung im Bereich des Dosiergehäuses vor dem Anschluss an die zumindest eine Lufteinlassöffnung einen zumindest annähernden 180° Krümmungsbereich aufweist.

Eine einfache und vorteilhafte Anordnung der Luftleitung zur Zuführung der Luftströmung von der Rückseite des Dosiergehäuses lässt sich dadurch erreichen, dass die Luftzuleitung seitlich an dem zweiten Vorratsbehälter und/oder zugeordnetem Dosiergehäuse vorbei von vorne nach hinten geführt ist.

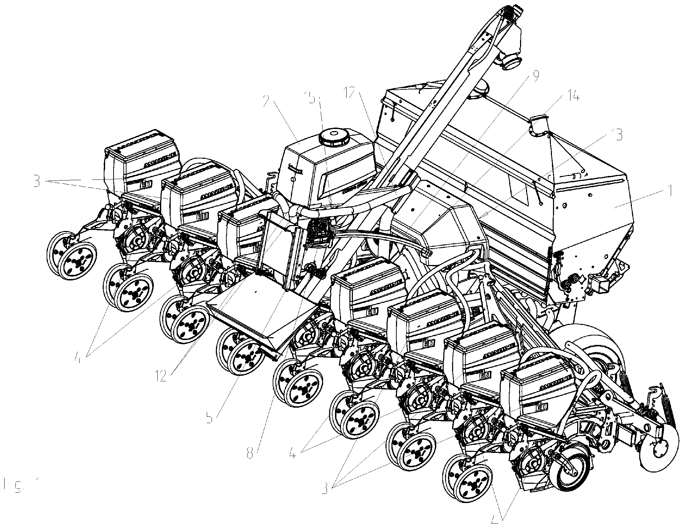

Weitere Einzelheiten der Erfindung sind der Beispielsbeschreibung und den Zeichnungen zu entnehmen. Die Zeichnungen zeigen
- Fig.1: eine erfindungsgemäß ausgestaltete Sämaschine in perspektivischer Ansicht von schräg seitlich hinten und

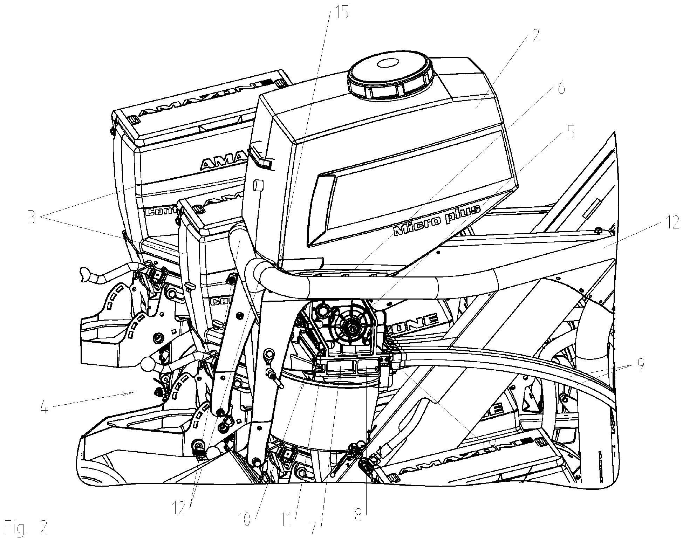

- Fig.2: die Anordnung der Luftzuführung zu dem Dosiergehäuse des hinteren Vorratsbehälters in perspektivischer Ansicht.

Die als Einzelkornsämaschine ausgebildete Sämaschine weist den ersten, d.h. vorderen Vorratsbehälter 1 zur Aufnahme von Düngemitteln, den zweiten, d.h. hinteren Vorratsbehälter 2 zur Aufnahme von Microgranulat und eine Vielzahl von in einer Reihe angeordneten Vorratsbehältern 3 für die Einzelkornsäaggregate 4 auf. Die Vorratsbehälter 1 und 2 sowie die Einzelkornsäaggregate 4 sind an dem nicht im Einzelnen dargestellten Rahmen der Sämaschine in bekannter Weise angeordnet. Im hinteren Bereich der Sämaschine ist der Vorratsbehälter 2 zur Aufnahme von Microgranulat angeordnet. An den unteren Bereich 6 dieses Vorratsbehälters 2 schließt sich das Dosiergehäuse 5 an. In dem Gehäuse 5 befindet sich ein nicht näher dargestelltes Dosierorgan, um das sich in den Vorratsbehälter 2 befindliche Material, hier Microgranulat in die sich an den unteren Bereich 6 des Dosiergehäuses 5 anschließenden Abgangsöffnungen 7 aufweisenden Abgangsleitungen 8, an denen zu nicht dargestellten Ausbringelementen führende Materialleitungen 9 angeschlossen sind.

Das Dosiergehäuse 5 weist auf seiner Rückseite 10 Lufteinlassöffnungen 11, die mit den Abgangsleitungen 8 und den Abgangsöffnungen 7 in Verbindung stehen, auf. An den Lufteinlassöffnungen 11 sind die beiden Luftzuleitungen 12 angeschlossen. Die Luftzuleitungen 12 sind an dem Druckluftanschluss eines Gebläses 13, das unter der Abdeckungshaube 14 angeordnet ist, angeschlossen. Das Gebläse 13 befindet sich also vor dem hier als zweiten Vorratsbehälter 2 bezeichneten Behälter, der zur Aufnahme von Microgranulat vorgesehen ist. Die an dem Gebläse 13 angeschlossene Luftzuleitungen 12 für das Dosiergehäuse 5 sind auf der Rückseite 10 des Dosiergehäuses 5 des zweiten Vorratsbehälters 2 an die Lufteinlassöffnungen 11 dieses Dosiergehäuses 5 angeschlossen. Die Luftzuleitungen 12 weisen im Bereich des Dosiergehäuses 5 jeweils zumindest einen annähernd 180° Krümmungsbereich 15 auf. Die Luftzuleitungen 12 sind seitlich an dem zweiten Vorratsbehälter 2 und dem zugeordneten Dosiergehäuse 5 vorbei von vorne nach hinten geführt. Im Ausführungsbeispiel sind zwei Luftzuleitungen 12 für das Dosiergehäuse 5 des zweiten Vorratsbehälters 2 vorgesehen. Hierbei ist die eine Luftzuleitung 12 auf der einen Seite seitlich an dem zweiten Vorratsbehälter 2 und dem zugeordnetem Dosiergehäuse 5 und die andere Luftzuleitung 12 auf der einen Seite seitlich an dem zweiten Vorratsbehälter 2 und dem zugeordnetem Dosiergehäuse 5 vorbei von vorne nach hinten geführt ist.

## Patentansprüche

1. Sämaschine mit einem Rahmen und zumindest einem ersten Vorratsbehälter (1) und zumindest einem hinter dem ersten Vorratsbehälter (1) angeordneten zweiten Vorratsbehälter (2) mit zumindest einem pneumatisch beaufschlagten Dosierer zum Einbringen von landwirtschaftlichen Materialien, insbesondere Mikrogranulat in einen Luftstrom mit einem Dosiergehäuse (5), welches zumindest eine Lufteinlassöffnung (11), an welche zumindest eine von einem zumindest vor dem zweiten Vorratsbehälter (2) angeordnetem Gebläse (13) mit Druckluft beaufschlagte Luftzuleitung (12) angeschlossen ist, und Abgangsöffnungen (7) aufweist, an denen mit einer Luftströmung beaufschlagte Materialleitungen (9), die zu Ausbringelementen führen, angeschlossen sind, wobei die zumindest eine Lufteinlassöffnung (11), an der die mit dem Gebläse (13) verbundene Luftzuleitung (12) für das Dosiergehäuse (5) angeschlossen ist, sich auf der Rückseite (10) des Dosiergehäuses (5) des zweiten Vorratsbehälters (2) befindet, **dadurch gekennzeichnet, dass** zwei Luftzuleitungen (12) für das Dosiergehäuse (5) des zweiten Vorratsbehälters (2) vorgesehen sind, dass die eine Luftzuleitung (12) auf der einen Seite seitlich an dem zweiten Vorratsbehälter (2) und/oder zugeordnetem Dosiergehäuse (5) und die andere Luftzuleitung (12) auf der anderen Seite seitlich an dem zweiten Vorratsbehälter (2) und/oder zugeordnetem Dosiergehäuse (5) vorbei von vorne nach hinten geführt ist.

2. Sämaschine nach Anspruch 1, **dadurch gekennzeichnet, dass** die Luftzuleitung (12) im Bereich des Dosiergehäuses (5) vor dem Anschluss an die zumindest eine Lufteinlassöffnung (11) einen zumindest annähernden 180° Krümmungsbereich (15) aufweist.

3. Sämaschine nach zumindest einem der vorstehenden Ansprüche, **dadurch gekennzeichnet, dass** die Luftzuleitung (12) seitlich an dem zweiten Vorratsbehälter (2) und/oder zugeordnetem Dosiergehäuse (5) vorbei von vorne nach hinten geführt ist.

## Claims

1. Sowing machine with a frame and at least one first storage container (1) and at least one second storage container (2) which is arranged behind the first storage container (1) and has at least one pneumatically charged metering device for introducing agricultural materials, in particular microgranules, into an air stream, with a metering housing (5) which has at least one air inlet opening (11), to which at least one air feed line (12) charged with compressed air by a fan (13) arranged at least in front of the second storage container (2) is connected, and outlet openings (7), to which material lines (9) which are charged with an air flow and lead to discharge elements are connected, wherein the at least one air inlet opening (11) to which the air feed line (12), which is connected to the fan (13), for the metering housing (5) is connected is located on the rear side (10) of the metering housing (5) of the second storage container (2), **characterized in that** two air feed lines (12) are provided for the metering housing (5) of the second storage container (2), **in that** the one air feed line (12) is guided from the front to the rear on the one side laterally past the second storage container (2) and/or assigned metering housing (5) and the other air feed line (12) is guided from the front to the rear on the other side laterally past the second storage container (2) and/or assigned metering housing (5).

2. Sowing machine according to Claim 1, **characterized in that** the air feed line (12) has an at least approximately 180° region of curvature (15) in the region of the metering housing (5) prior to the connection to the at least one air inlet opening (11).

3. Sowing machine according to at least one of the preceding claims, **characterized in that** the air feed line (12) is guided from the front to the rear laterally past the second storage container (2) and/or assigned metering housing (5).

## Revendications

1. Semoir comprenant un cadre et au moins un premier réservoir (1) et au moins un deuxième réservoir (2) disposé derrière le premier réservoir (1) avec au moins un dispositif de dosage sollicité pneumatiquement pour introduire des matières agricoles, en particulier des microgranules dans un flux d'air, avec un boîtier de dosage (5) qui présente au moins une ouverture d'entrée d'air (11) au niveau de laquelle est raccordée au moins une conduite d'alimentation en air (12) sollicitée avec de l'air sous pression par une soufflante (13) disposée devant le deuxième réservoir (2) et des ouvertures de sortie (7) au niveau desquelles sont raccordées des conduites de matière (9) sollicitées avec un écoulement d'air, qui conduisent à des éléments de distribution, l'au moins une ouverture d'entrée d'air (11) au niveau de laquelle est raccordée la conduite d'alimentation en air (12) pour le boîtier de dosage (5), connectée à la soufflante (13), se trouvant du côté arrière (10) du boîtier de dosage (5) du deuxième réservoir (2), **caractérisé en ce que** deux conduites d'alimentation en air (12) sont prévues pour le boîtier de dosage (5) du deuxième réservoir (2), **en ce que** l'une des conduites d'alimentation en air (12) est guidée d'un côté latéralement devant le deuxième réservoir (2) et/ou le boîtier de dosage associé (5) et l'autre conduite d'alimentation en air (12) est guidée de l'autre côté latéralement devant le deuxième réservoir (2) et/ou le boîtier de dosage associé (5) de l'avant vers l'arrière.

2. Semoir selon la revendication 1, **caractérisé en ce que** la conduite d'alimentation en air (12) présente, dans la région du boîtier de dosage (5), avant le raccordement à l'au moins une ouverture d'entrée d'air (11), une région coudée (15) d'au moins approximativement 180°.

3. Semoir selon au moins l'une quelconque des revendications précédentes, **caractérisé en ce que** la conduite d'alimentation en air (12) est guidée latéralement devant le deuxième réservoir (2) et/ou le boîtier de dosage associé (5) de l'avant vers l'arrière.
